# DEMANDE DE BREVET EUROPEEN

(11) **EP 3 401 165 A1**
(43) Date de publication de la demande: **14.11.2018**
(21) Numéro de dépôt: 18167056.3
(22) Date de dépôt: 12.04.2018
(51) Int. Cl.: B60Q 9/00

(54) **AIDE À LA CONDUITE EN PHASE DE RECUL PERMETTANT L'OUVERTURE SANS RISQUÉ D'UN OUVRANT ARRIÈRE**

(30) Priorité: 12.05.2017 FR 1754176
(71) Demandeur: RENAULT s.a.s., 92100 Boulogne-Billancourt (FR)
(72) Inventeur: MONDOT, Frédéric, 78125 GAZERAN (FR)

(57) **Abrégé**

L'invention concerne un procédé d'assistance à la conduite d'un véhicule (100) en phase de recul, consistant à afficher sur un écran (111) destiné au conducteur un flux vidéo provenant d'une caméra de recul (101), à déterminer un gabarit fonction de la longueur maximale projetée au sol de l'ouvrant arrière dudit véhicule, et des paramètres de prise de vue de ladite caméra, et à afficher ledit gabarit en surimpression sur ledit écran.

## Description

### DOMAINE DE L'INVENTION

L'invention concerne un mécanisme d'aide à la conduite, et plus particulièrement pour la conduite d'un véhicule en phase de recul en vue de l'arrêt du véhicule dans une place de stationnement.

### CONTEXTE DE L'INVENTION

Un très grand nombre de véhicules sont aujourd'hui équipés de caméras leur permettant d'appréhender leur environnement. Ces caméras sont très utiles notamment lors d'une phase de recul en vue de l'arrêt du véhicule dans une place de stationnement.

En général, une caméra est disposée à l'arrière du véhicule, orientée vers l'arrière, et est appelée « caméra de recul ». Son fonctionnement est déclenché par le recul du véhicule et permet l'affichage du flux vidéo qu'elle capture sur un écran destiné au conducteur. D'autres caméras, par exemple situés sur les côtés, ou à l'avant, peuvent permettre d'avoir une vue plus globale de l'environnement qui peut être restituée sur cet écran.

Durant une manoeuvre, le conducteur peut donc tirer profit de cet écran pour mieux comprendre son environnement et, par exemple, se mettre plus facilement dans une position de stationnement, à une bonne distance des obstacles autour de lui (murs, poteaux, trottoirs, autres véhicules, etc.).

Certaines solutions permettent d'afficher sur l'écran en surimpression des repères permettant au conducteur de mieux évaluer les distances séparant le véhicule des différents obstacles.

Un inconvénient de ces repères et, plus généralement, de l'ensemble des solutions de l'état de la technique, réside dans le fait qu'elles ne prennent en compte qu'un aspect statique du véhicule. Or, un véhicule comprend des ouvrants, et les solutions actuelles ne permettent pas de guider le conducteur vers une position de stationnement permettant l'ouverture de ces ouvrants.

Il en résulte des conséquences comme l'impossibilité d'ouvrir le coffre ou la lunette arrière du véhicule, ou son ouverture partielle limitant l'accès au coffre, ou encore des chocs de l'ouvrant sur l'obstacle pouvant endommager la carrosserie du véhicule, etc.

### RESUME DE L'INVENTION

Le but de la présente invention est de fournir un mécanisme palliant au moins partiellement les inconvénients précités. Plus particulièrement, l'invention vise à fournir un mécanisme d'aide au conducteur permettant d'afficher sur un écran d'une part un flux vidéo transmis par la caméra de recul et d'autre part, en surimpression, des informations de guidage prenant en compte la longueur au sol maximale de l'ouvrant arrière du véhicule.

A cette fin, la présente invention propose un procédé d'assistance à la conduite d'un véhicule en phase de recul, consistant à afficher sur un écran destiné au conducteur un flux vidéo provenant d'une caméra de recul, à déterminer un gabarit fonction de la longueur maximale projetée au sol de l'ouvrant arrière dudit véhicule, et des paramètres de prise de vue de ladite caméra, et à afficher ledit gabarit en surimpression sur ledit écran.

Suivant des modes de réalisation préférés, l'invention comprend une ou plusieurs des caractéristiques suivantes qui peuvent être utilisées séparément ou en combinaison partielle entre elles ou en combinaison totale entre elles :
- le gabarit est une ligne parallèle à la largeur dudit véhicule ;
- le gabarit est déterminé en fonction de l'excursion maximale dudit ouvrant entre une position fermée et la position d'ouverture maximale ;
- le gabarit est déterminé en fonction d'un espace supplémentaire, permettant à une personne de se glisser derrière ledit véhicule afin de pouvoir accéder à l'intérieur dudit véhicule par ledit ouvrant ;
- en plus dudit gabarit, une forme géométrique additionnelle est affichée, à une position calculée à partir dudit gabarit ;

Un autre objet de l'invention concerne un programme d'ordinateur comportant des instructions qui, lorsqu'exécutés par un processeur d'un système informatique, entraînent la mise en oeuvre d'un procédé tel que précédemment décrit.

Un autre objet de l'invention concerne un dispositif d'assistance à la conduite d'un véhicule en phase de recul, comportant un écran destiné au conducteur pour afficher un flux vidéo provenant d'une caméra de recul, et des moyens de calcul pour déterminer un gabarit en fonction de la longueur maximale projetée au sol de l'ouvrant arrière dudit véhicule, et des paramètres de prise de vue de ladite caméra, et pour afficher ledit gabarit en surimpression sur ledit écran.

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdits moyens de calcul sont prévus pour déterminer ledit gabarit en fonction d'un espace supplémentaire, permettant à une personne de se glisser derrière ledit véhicule afin de pouvoir accéder à l'intérieur dudit véhicule par ledit ouvrant ;
- lesdits moyens de calcul sont prévus pour déterminer, en plus dudit gabarit, une forme géométrique additionnelle est affichée, à une position calculée à partir dudit gabarit.

Un autre objet de l'invention est relatif à un véhicule comportant un dispositif tel que précédemment défini.

Dans ce véhicule, selon un mode de réalisation, ledit ouvrant est un hayon. Selon un autre mode de réalisation, ledit ouvrant est un coffre

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 schématise de façon fonctionnelle un véhicule susceptible de mettre en oeuvre l'invention.
La figure 2 représente schématiquement un exemple de vue sur un écran selon un mode de réalisation de l'invention.
Les figures 3a et 3b représentent schématiquement des exemples de véhicules sur lesquels l'invention peut être mise en oeuvre.

### DESCRIPTION DETAILLEE DE L'INVENTION

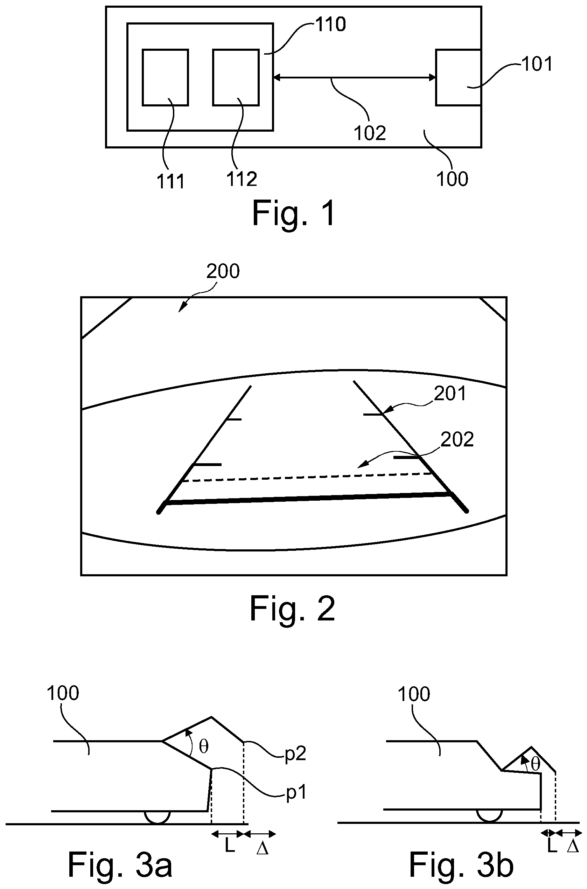

Sur la figure 1 est représenté un véhicule 100 comportant une caméra de recul 101, reliée de façon fonctionnelle, à un tableau de bord 110 afin de permettre l'affichage sur un écran 111 de ce tableau de bord, le contenu du flux vidéo capturé par la caméra.. Le lien fonctionnel 102 reliant la caméra 101 à l'écran 111 peut être de différentes natures, mais en général mis en oeuvre par un réseau filaire.

Des dispositifs de calcul 112 sont également embarqués dans le véhicule 100, et en général disposés au niveau du tableau de bord 110, et permettent le traitement des flux vidéo afin d'y insérer des informations complémentaires.

Selon l'invention, ces dispositifs de calcul permettent notamment de déterminer un gabarit fonction de la longueur maximale projetée au sol de l'ouvrant arrière du véhicule, et des paramètres de prise de vue de la caméra 101, et à afficher ce gabarit en surimpression sur l'écran 111.

Ce gabarit peut être une simple ligne parallèle à la largeur du véhicule ainsi que représenté sur la figure 2. On voit sur cette figure en surimpression aux images vidéo 200 un premier gabarit 201 permettant de guider la manoeuvre du conducteur. Ce premier gabarit 201 est conforme à l'état de la technique et permet de visualiser les distances entre le véhicule et les obstacles alentours. Ce gabarit peut en outre être dynamique en prenant en compte la direction des essieux imposée par le volant, par exemple selon la même méthodologie que celle exposée dans la demande FR 15-50369.

Selon l'invention, un deuxième gabarit 202 est affiché en surimpression aux images vidéo 200. Ce gabarit correspond à la détermination de la longueur maximale projetée au sol de l'ouvrant arrière du véhicule, en fonction des paramètres de prise de vue de la caméra.

Sur cette figure, donc, le gabarit est une ligne horizontale, qui correspond donc à une ligne parallèle à la largeur du véhicule dans le cas où la caméra est correctement orientée dans l'axe du véhicule. D'autres formes de gabarit sont toutefois envisageables et susceptibles d'entrer dans le cadre de l'invention.

Les figures 3a et 3b permettent de mieux comprendre comment est déterminée la longueur maximale projetée au sol de l'ouvrant arrière.

La figure 3a illustre un véhicule dans lequel l'ouvrant arrière est un hayon, c'est-à-dire un ensemble lunette arrière / porte de coffre, s'ouvrant ensemble.

Lorsqu'on ouvre un tel ouvrant d'un angle θ, son extrémité s'écarte d'une distance L du bord du châssis ou du véhicule avec ouvrant fermé, selon une projection verticale de cette extrémité sur le sol. Cette distance forme la longueur maximale considérée pour la détermination du gabarit.

Il est à noter que l'extrémité de l'ouvrant est la position la plus écartée de l'arrière de l'habitacle, appartenant à cet ouvrant. Il peut donc s'agir d'un point distinct en fonction de l'angle d'ouverture. Ainsi, on voit, pour la position fermée, que l'extrémité correspond au point p1 de l'ouvrant, tandis qu'en position ouverte, l'extrémité correspond au point p2 de l'ouvrant.

La longueur L maximale projetée sur le sol correspond donc à la distance entre la projection verticale du bord du véhicule lorsque l'ouvrant est fermée et la projection la plus éloignée de l'ensemble des points de l'ouvrant pour les différentes positions de l'ouvrant. Préférentiellement, on considère l'excursion maximale de l'ouvrant entre la position fermée et la position ouverte au maximum, afin notamment d'éviter les chocs de l'ouvrant sur un obstacle.

Le bord du véhicule lorsque l'ouvrant est fermé peut correspondre au bord arrière du châssis, ou bien le bord le plus éloigné du châssis de l'ouvrant en position fermée, lorsque celui-ci fait saillie. Sur la figure 3a, ce bord est représenté par le point p1, et la longueur maximale à prendre en compte est donc L=d(pl, p2).

Les même principes s'appliquent dans le cas d'un véhicule « tricorps » tel que représenté sur la figure 3b. Un véhicule tricorps (c'est-à-dire « à trois volumes ») se distingue d'un véhicule à hayon par le fait que la lunette arrière est fixe et que seul le coffre forme l'ouvrant arrière.

L'excursion angulaire θ du coffre peut être équivalente, mais se répercute de façon généralement moindre sur la longueur maximale projetée L, beaucoup plus faible que dans le cas d'un hayon. Il peut toutefois être également intéressant de mettre en place l'invention dans le cas d'un coffre arrière.

Il est également intéressant que le gabarit prenne en compte un espace supplémentaire, Δ, permettant à une personne de se glisser entre le véhicule et l'éventuel obstacle, afin de pouvoir ouvrir l'ouvrant et accéder à l'intérieur du véhicule par l'ouvrant.

Auquel cas, un gabarit peut être inséré dans le flux vidéo pour une distance L+Δ.

Il est possible d'afficher uniquement un gabarit 202 correspondant à cette valeur L+Δ ou bien d'afficher deux gabarits, le premier correspondant à la valeur L, et le second à la valeur L+Δ.

De la sorte, le conducteur pourra effectuer sa manoeuvre en disposant d'information lui permettant d'ouvrir son ouvrant arrière sans risque et, éventuellement, d'avoir l'assurance qu'il pourra se glisser derrière son véhicule pour y accéder.

Cette mise en oeuvre est intéressante à la fois dans le cas d'un véhicule avec hayon et dans le cas d'un véhicule avec coffre.

Selon un mode de réalisation de l'invention, en plus du gabarit, une forme géométrique additionnelle est affichée, à une position réglable et basée sur ledit du gabarit. Cette forme peut typiquement être une ligne parallèle au bord extérieur du gabarit, et le conducteur peut alors manuellement régler sa distance du bord du gabarit.

Il peut ainsi définir manuellement un affichage supplémentaire, qui peut apparaître dans une couleur différente, l'aidant à se guider dans la manoeuvre. Ainsi, l'affichage peut être configuré par l'utilisateur en fonction de ses souhaits et contraintes, par exemple liés à un emplacement de stationnement privé à l'utilisateur.

L'affichage du gabarit est bien entendu fonction des paramètres de la caméra vidéo et notamment de l'ouverture optique.

La détermination de la position du gabarit en fonction de ces paramètres (qui sont le plus souvent fixes sur ce type de caméra de recul ne disposant pas de zoom) peut être effectuée en amont, avant livraison du véhicule et en fonction des données géométriques de l'ouvrant, tant en statique (son profilé) qu'en dynamique (ses positions ouverte et fermée).

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'assistance à la conduite d'un véhicule (100) en phase de recul, consistant à afficher sur un écran (111) destiné au conducteur un flux vidéo provenant d'une caméra de recul (101), à déterminer un gabarit fonction de la longueur maximale projetée au sol de l'ouvrant arrière dudit véhicule, et des paramètres de prise de vue de ladite caméra, et à afficher ledit gabarit en surimpression sur ledit écran.

2. Procédé selon la revendication 1 dans lequel ledit gabarit est une ligne parallèle à la largeur dudit véhicule.

3. Procédé selon l'une des revendications précédentes, dans lequel ledit gabarit est déterminé en fonction de l'excursion maximale dudit ouvrant entre une position fermée et la position d'ouverture maximale.

4. Procédé selon l'une des revendications précédentes, dans lequel ledit gabarit est déterminé en fonction d'un espace supplémentaire, permettant à une personne de se glisser derrière ledit véhicule afin de pouvoir accéder à l'intérieur dudit véhicule par ledit ouvrant.

5. Procédé selon l'une des revendications précédentes, dans lequel en plus dudit gabarit, une forme géométrique additionnelle est affichée, à une position calculée à partir dudit gabarit.

6. Programme d'ordinateur comportant des instructions qui, lorsqu'exécutés par un processeur d'un système informatique, entraînent la mise en oeuvre d'un procédé selon l'une des revendications précédente.

7. Dispositif d'assistance à la conduite d'un véhicule (100) en phase de recul, comportant un écran (111) destiné au conducteur pour afficher un flux vidéo provenant d'une caméra de recul (101), et des moyens de calcul (112) pour déterminer un gabarit en fonction de la longueur maximale projetée au sol de l'ouvrant arrière dudit véhicule, et des paramètres de prise de vue de ladite caméra, et pour afficher ledit gabarit en surimpression sur ledit écran.

8. Dispositif selon la revendication précédente, dans lequel lesdits moyens de calcul (112) sont prévus pour déterminer ledit gabarit en fonction d'un espace supplémentaire, permettant à une personne de se glisser derrière ledit véhicule afin de pouvoir accéder à l'intérieur dudit véhicule par ledit ouvrant.

9. Dispositif selon l'une des revendications 7 ou 8, dans lequel lesdits moyens de calcul sont prévus pour déterminer, en plus dudit gabarit, une forme géométrique additionnelle est affichée, à une position calculée à partir dudit gabarit

10. Véhicule (100) comportant un dispositif selon l'une des revendications 7 à 9.

11. Véhicule selon la revendication précédente, dans lequel ledit ouvrant est un hayon.

12. Véhicule selon la revendication 10, dans lequel ledit ouvrant est un coffre.
